# EUROPEAN PATENT APPLICATION

(11) **EP 4 057 606 A1**
(43) Date of publication of application: **14.09.2022**
(21) Application number: 22160858.1
(22) Date of filing: 08.03.2022
(51) Int. Cl.: H04M 11/02, G06Q 10/10, H04W 4/02

(54) **INFORMATION PROCESSING DEVICE, INFORMATION PROCESSING SYSTEM, OF INFORMATION PROCESSING METHOD, AND CARRIER MEANS**

(30) Priority: 12.03.2021 JP 2021040535
(71) Applicant: Ricoh Company, Ltd., Tokyo 143-8555 (JP)
(72) Inventor: NISHIMURA, Haruo, Tokyo, 143-8555 (JP)
(74) Representative: SSM Sandmair

(57) **Abstract**

An information processing device (10) includes a receiving unit (12) to receive, from a terminal (50), call location identification information identifying a location at which a request for a call notification is made with the terminal (50) and an identifying unit (13) to identify a notification destination based on the call location identification information. The notification destination is a destination of the call notification. The information processing device (10) includes a notification control unit (14) to transmit voice data to the notification destination as notification content of the call notification.

## Description

### BACKGROUND

### Technical Field

Embodiments of the present disclosure relate to an information processing device, an information processing system, an information processing method, and a carrier means.

### Description of the Related Art

In a retail store or a restaurant, for example, a customer may call a staff member for help.

Japanese Unexamined Patent Application Publication No. 2006-163447 discloses a method in which a bell device set in a store is operated by a customer to call a staff member.

However, with such a method, it is sometimes unclear which staff member is more appropriate to attend to a customer who called for help, resulting in difficulty in providing efficient customer service.

In light of the above, an object of the present disclosure is to provide a system that assists in providing efficient customer service.

According to an embodiment, a system that assists in providing efficient customer service is provided.

### SUMMARY

An embodiment of the present disclosure includes an information processing device including a receiving unit to receive, from a terminal, call location identification information identifying a location at which a request for a call notification is made with the terminal and an identifying unit to identify a notification destination based on the call location identification information. The notification destination is a destination of the call notification. The information processing device includes a notification control unit to transmit voice data to the notification destination as notification content of the call notification.

An embodiment of the present disclosure includes an information processing system including a terminal used by a customer and executing an application to read call location identification information from an extraneous resource, and transmit the call location identification information. The information processing system includes an information processing device including a receiving unit to receive, from the terminal, the call location identification information identifying a call location at which a request for a call notification is made with the terminal and an identifying unit to identify a notification destination based on the call location identification information. The notification destination is a destination of the call notification. The information processing device includes a notification control unit to transmit voice data to the notification destination as notification content of the call notification.

An embodiment of the present disclosure includes an information processing method. The information processing method includes receiving, from a terminal, call location identification information identifying a call location at which a request for a call notification is made with the terminal and identifying a notification destination based on the call location identification information. The notification destination is a destination of the call notification. The information processing method includes transmitting voice data to the notification destination as notification content of the call notification.

An embodiment of the present disclosure includes a carrier means carrying a computer system readable code for controlling a computer to carry out a method including receiving, from a terminal, call location identification information identifying a call location at which a request for a call notification is made with the terminal and identifying a notification destination based on the call location identification information. The notification destination is a destination of the call notification. The method includes transmitting voice data to the notification destination as notification content of the call notification.

According to one or more embodiments of the present disclosure, a system that assists in providing efficient customer service is provided.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating a configuration of an information processing system, according to an extemporary embodiment of the present disclosure;
FIG. 2 is a block diagram illustrating a hardware configuration of an operation server according to the extemporary embodiment of the present disclosure;
FIG. 3 is a block diagram illustrating a functional configuration of the operation server according to the extemporary embodiment of the present disclosure;
FIG. 4A and FIG. 4B are a sequence diagram illustrating a process performed by the information processing system according to the extemporary embodiment of the present disclosure;
FIG. 5 is a diagram illustrating an example of a two-dimensional code, according to the extemporary embodiment of the present disclosure;
FIG. 6 is a diagram illustrating a configuration of a screen information storage unit according to the extemporary embodiment of the present disclosure;
FIG. 7 is a diagram illustrating an example of display of call operation screen according to the extemporary embodiment of the present disclosure;
FIG. 8 is a diagram illustrating a configuration of the notification management information storage unit, according to the extemporary embodiment of the present disclosure;
FIG. 9 is a diagram illustrating a configuration of a call group storage unit, according to the extemporary embodiment of the present disclosure;
FIG. 10 is a diagram illustrating an example of display of call completion screen, according to the extemporary embodiment of the present disclosure;
FIG. 11 is a sequence diagram illustrating a process performed by the information processing system according to the extemporary embodiment of the present disclosure;
FIG. 12 is a diagram illustrating an example of display of voice input screen, according to the extemporary embodiment of the present disclosure;
FIG. 13 is a diagram illustrating an example of display of registration screen, according to the extemporary embodiment of the present disclosure;
FIG. 14 is a flowchart illustrating a process of generating screen data of the call operation screen, according to the extemporary embodiment of the present disclosure; and
FIG. 15 is a diagram illustrating an example of display of registration list screen, according to the extemporary embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

The terminology used herein is for the purpose of describing particular embodiments only and is not intended to be limiting of the present invention. As used herein, the singular forms "a, "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

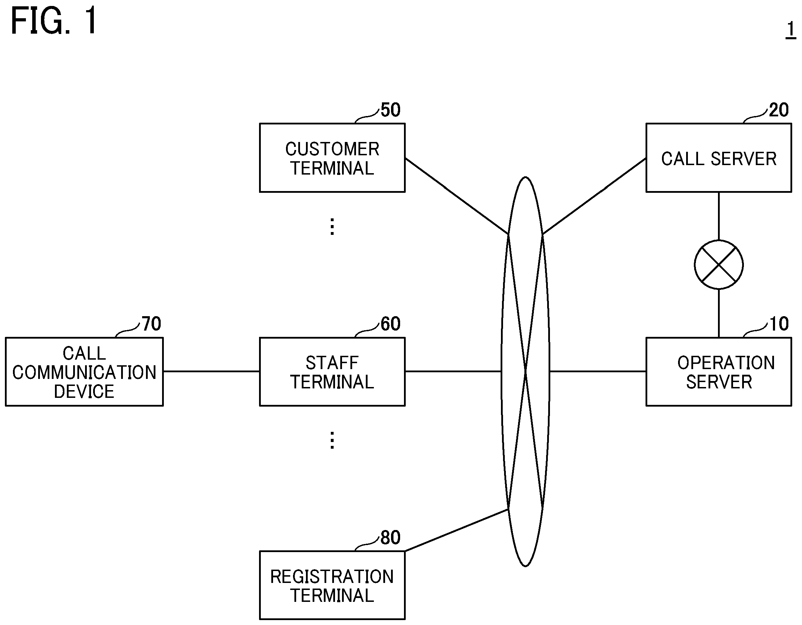

A description is given of an embodiment of this disclosure with reference to the accompanying drawings. FIG. 1 is a block diagram illustrating a configuration of an information processing system 1, according to an embodiment of the present disclosure. In the description of the present embodiment given below, the information processing system 1 is applied to a retailer (referred to as a "retailer X" in the description) such as a department store, a supermarket, or a home improvement store. The retailer X is a specific organization that develops one or more stores.

A plurality of store clerks or customer staff works in each store of the retailer X. In the description of the embodiment, each store clerk or each customer staff is simply referred to as a staff member or a member of staff. As illustrated in FIG. 1, the information processing system 1 includes a plurality of call communication devices 70 and a plurality of staff terminals 60, one or more registration terminals 80, one or more customer terminals 50, a call server 20, and an operation server 10. One of the plurality of call communication devices 70 and one of the plurality of staff terminals 60 are carried around by each staff member. The one or more registration terminals 80 are located at a predetermined location within retailer X. Each of the one or more customer terminals 50 belongs to a customer who visits any store of the retailer X.

Each customer terminal 50 and each registration terminal 80 are communicably connectable to the operation server 10 via a network such as the Internet. Each staff terminal 60 is communicably connectable to the call server 20 via a network such as the Internet. The operation server 10 is communicably connectable to the call server 20 via a network such as the Internet.

The customer terminal 50 is a communication terminal such as, for example, a smartphone or a tablet terminal. Various types of communication terminals are usable as the customer terminal 50 as long as a communication terminal has a camera function, a voice input function, a voice output function, and a two dimensional code reading function.

The call communication device 70 includes a microphone and an earphone. An example of the call communication device 70 is an intercom or a transceiver. The call communication device 70 may be a wearable device such as a headset or may be a handheld device. The call communication device 70 reproduces voice related to a call from a customer. In some embodiments, the call communication device 70 is not included in the information processing system 1. An audio output function of the staff terminal 60 may execute reproduction of the voice.

The staff terminal 60 is a communication terminal such as, for example, a smartphone or a tablet terminal. The staff terminal 60 is communicably connected to the corresponding call communication device 70 by short-range wireless communication. The staff terminal 60 receives voice data related to a call from a customer distributed by the call server 20, and outputs the received voice data to the call communication device 70.

The registration terminal 80 is a communication terminal operated by a staff member, such as a personal computer (PC) or a smartphone. The registration terminal 80 is used to register, in advance, information used for processing to be performed by the operation server 10.

The operation server 10 is one or more computers that provide a cloud service for assisting customer service of the retailer X. For example, in response to a call from the customer terminal 50, the operation server 10 requests the call server 20 to transmit the voice data corresponding to the call, as a call notification, to the staff terminal 60.

The call server 20 is one or more computers that transmit the voice data, which is transmitted from the operation server 10, to the staff terminals 60 that is one of the plurality of staff terminals 60 and identified by the operation server 10 as a notification destination.

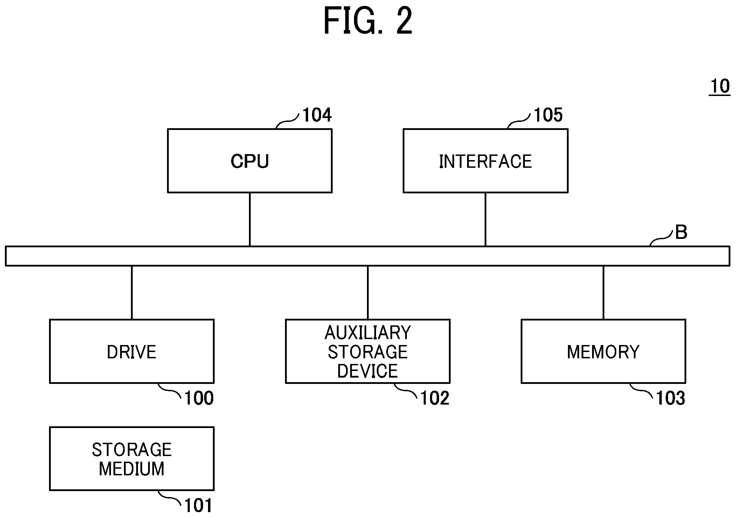

FIG. 2 is a block diagram illustrating a hardware configuration of the operation server 10 according to the present embodiment. The operation server 10 in FIG. 2 includes, for example, a drive 100, an auxiliary storage device 102, a memory 103, a central processing unit (CPU) 104, an interface 105, which are connected to each other by a bus B.

A program that implements the processing in the operation server 10 is provided by a storage medium (recording medium) 101 such as a compact disk-read only memory (CD-ROM). When the storage medium 101 storing the program is set in the drive 100, the program is installed in the auxiliary storage device 102 from the storage medium 101 via the drive 100. In some embodiments, the program downloaded from another computer through a network, in alternative to be installed from the storage medium 101. The auxiliary storage device 102 stores the installed program and also stores files and data to be used.

In response to an instruction to activate the program, the memory 103 reads the program from the auxiliary storage device 102 and stores the program. The CPU 104 executes a function related to the operation server 10 according to the program stored in the memory 103. The interface 105 is used for connecting to a network.

Each of the call server 20, the customer terminal 50, the staff terminal 60, and the registration terminal 80 may include the substantially same hardware configuration as illustrated in FIG. 2.

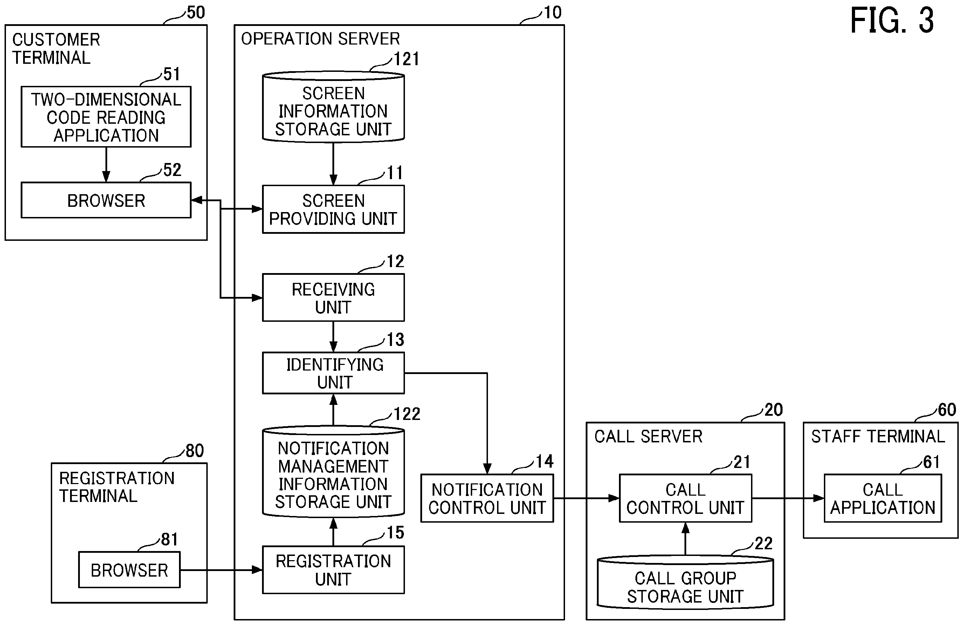

FIG. 3 is a block diagram illustrating a functional configuration of the information processing system 1 according to the present embodiment.

In FIG. 3, the customer terminal 50 includes a two-dimensional code reading application 51 and a browser 52. The two-dimensional code reading application 51 and the browser 52 are implemented by processing executed by the CPU of the customer terminal 50 according to one or more programs installed on the customer terminal 50. The two-dimensional code reading application 51 causes the customer terminal 50 to read a two-dimensional code. The browser 52 displays a web page including a screen for calling staff. The web page is transmitted from the operation server 10. However, a method of displaying on the customer terminal 50 a screen for calling staff is not limited to the method described above, namely, displaying a web page including a screen for calling staff by the browser 52. In some embodiments, a predetermined application installed in advance on the customer terminal 50 has screen data A for displaying a fixed portion of a screen for calling staff. In this case, the application may receive from, the operation server 10, screen data B used for displaying a variable portion of the screen for calling staff and display the screen for calling staff on the basis of the screen data A and the screen data B.

The staff terminal 60 includes a call application 61. The call application 61 is implemented by processing executed by the staff terminal 60 according to one or more programs installed on the staff terminal 60. The call application 61 is an application that implements a call communication via the call server 20. In the present embodiment, the call application 61 receives the voice data transmitted from the call server 20 and outputs the voice data to the call communication device 70.

The call server 20 includes a call control unit 21. The call control unit 21 is implemented by processing executed by the CPU of the call server 20 according to one or more programs installed on the call server 20. The call server 20 also uses a call group storage unit 22. The call group storage unit 22 is implemented by using, for example, an auxiliary storage device of the call server 20 or a storage device (recording medium) connectable to the call server 20 through a network.

The call control unit 21 transmits the voice data transmitted from the operation server 10 to the staff terminal 60. The call group storage unit 22 stores, for each tenant (an organization such as a retail store) that has concluded a use contract for a voice call service provided by the call server 20, a definition of a call group in which voice calls are shared, in the tenant. The call group is a group of two or more users each uses the call application 61. The definition of a call group is information indicating a user group belonging to the call group.

The operation server 10 includes, for example, a screen providing unit 11, a receiving unit 12, an identifying unit 13, a notification control unit 14, a registration unit 15. Each of these units is implemented by processing executed by the CPU 104 according to one or more programs installed on the operation server 10. The operation server 10 also uses a screen information storage unit 121 and a notification management information storage unit 122. Each of these storage units is implemented by using, for example, the auxiliary storage device 102 or a storage device that is connected to the operation server 10 through a network.

In response to a request from the customer terminal 50, the screen providing unit 11 provides, to the customer terminal 50, screen data (for example, HyperText Markup Language (HTML) data) of a screen for allowing a customer to perform a call operation of calling the staff of the retailer X. The screen may be referred to as a "call operation screen" in the description of the present embodiment. The call operation screen may be changed, or customized for each tenant or for each store included in the tenant. The screen information storage unit 121 stores information indicating a storage destination of the screen data representing the call operation screen. The screen providing unit 11 refers to the screen information storage unit 121 and specifies the storage destination of the screen data.

The receiving unit 12 receives a request for calling staff. The request is, in other words, a request for a call notification, which is made with the customer terminal according to an operation of a customer, and the call notification is a call from the customer to a member of staff. The request may be referred to as a "call request" or a "request for a call notification" in the description of the embodiment. The call request is transmitted from the customer terminal 50 in response to an operation performed by a customer on the call operation screen.

The identifying unit 13 refers to the notification management information storage unit 122 to identify a notification destination of the call request received by the receiving unit 12 and notification content corresponding to the call request. The notification destination is one or more of the plurality of staff terminals 60. The notification management information storage unit 122 stores information used for identifying the notification destination and the notification content corresponding to the call request. The information may be referred to as "notification management information" in the description of the embodiment.

The notification control unit 14 controls transmission of the notification content identified by the identifying unit 13 to the notification destination identified by the identifying unit 13. More specifically, the notification control unit 14 requests the call server 20 to transmit the notification content to the notification destination.

In response to a request from the registration terminal 80, the registration unit 15 registers notification management information in the notification management information storage unit 122.

The registration terminal 80 includes a browser 81. The browser 81 is implemented by processing executed by the CPU of the registration terminal 80 according to one or more programs installed on the registration terminal 80. The browser 81 displays a screen for registering the notification management information, for example.

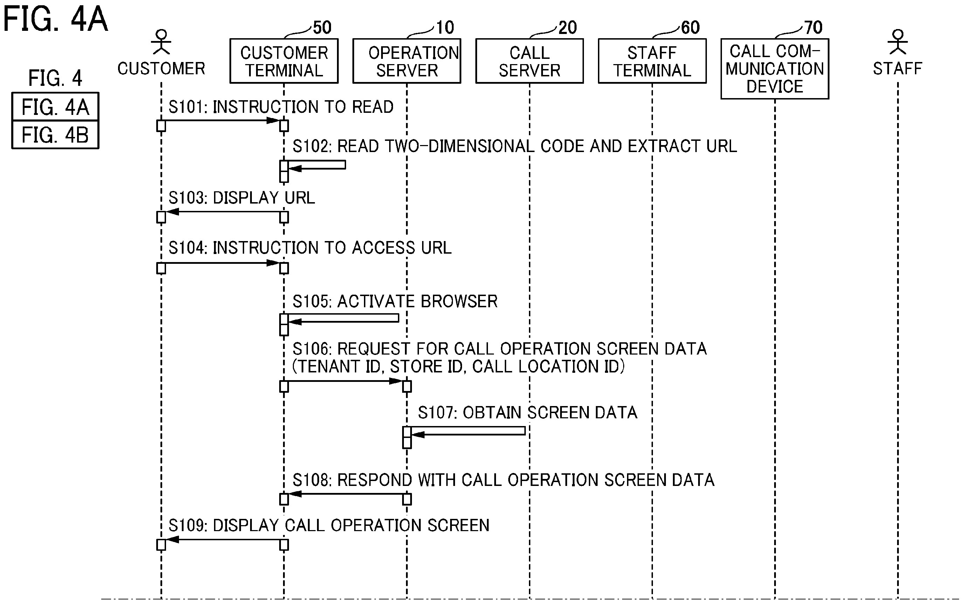

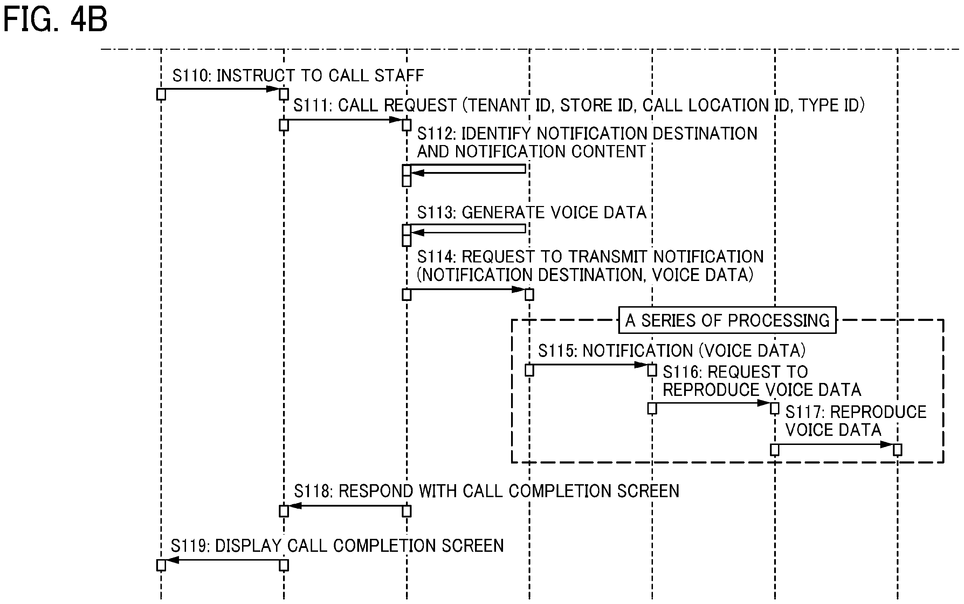

A process executed by the information processing system 1 is described below. FIG. 4A and FIG. 4B are a sequence diagram illustrating a process performed by the information processing system 1 according to the present embodiment. In FIG. 4A and FIG. 4B, the process is performed in a case where a customer visiting at a sales floor, which is a sales floor Z, in a store, which is a store Y, of the retailer X, has a question to ask a staff or a matter to talk with the staff in the store Y. The customer terminals 50 in the description of FIG. 4A and FIG. 4B belongs to the customer who is visiting at the sales floor Z.

In step S101, the customer inputs, to the two-dimensional code reading application 51 of the customer terminal 50, an instruction to read a two-dimensional code in order to capture the two-dimensional code posted at a predetermined place in the store Y.

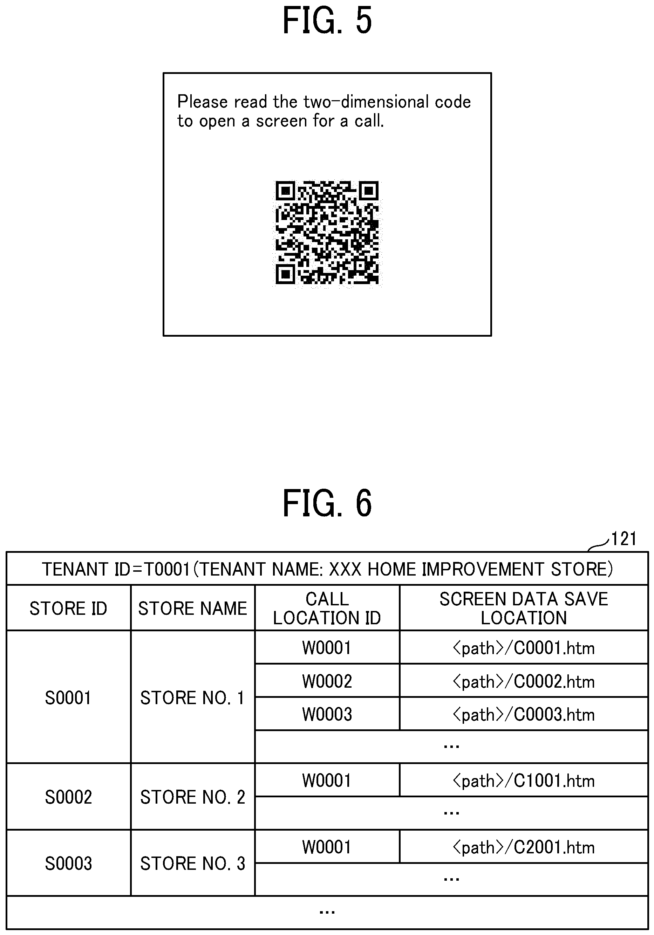

FIG. 5 is a diagram illustrating an example of the two-dimensional code, according to the present embodiment. The two-dimensional code may be posted in each sales floor of the store Y, or may be on the floor map of the store Y for each sales floor. Alternatively, the two-dimensional code may be attached to a movable object such as a product. In other words, where the two-dimensional code is not limited to a fixed location.

When inputting the instruction to read the two-dimensional code, the customer aligns a camera of the customer terminal 50 with the two-dimensional code. The two-dimensional code reading application 51 causes the customer terminal 50 to read the two-dimensional code, and extracts a uniform resource locator (URL) from an image of the read two-dimensional code (S102). Subsequently, the two-dimensional code reading application 51 displays the URL on the customer terminal 50 (SI03). The URL is a URL corresponding to a call operation screen for calling the staff of the store Y For example, the URL has the following format.
https://staffcall.com/T0001/S0003/WO001

In such a URL, a part of "T0001" indicates a tenant ID. A part corresponding to "S0003" indicates a store ID. A part corresponding to "WO001" indicates a call location ID. That is, the URL includes a tenant ID, a store ID, and a call location ID as parameters. Each parameter portion may be encoded or encrypted from a security perspective.

The tenant ID is identification information for a tenant (contractor) of a service provided by the operation server 10 and the call server 20. In the present embodiment, the retailer X is a tenant. In the present embodiment, "T0001" is a tenant ID corresponding to the retailer X.

The store ID is identification information for identifying each of the stores belonging to the tenant. In the present embodiment, "S0003" is a store ID corresponding to the store Y.

The call location ID is identification information identifying a call location, which is a location or a place where service is requested by a customer. Basically, the call location is a sales floor corresponding to a location where the two-dimensional code is.

When the customer inputs an instruction to access the URL by an operation such as tapping the URL (S104), the customer terminal 50 activates the browser 52 (S105). At this time, the customer terminal 50 inputs the URL to the browser 52.

Subsequently, the browser 52 transmits a screen data acquisition request for a call operation screen to the URL (S106). The acquisition request includes the URL

Upon receiving the acquisition request, the screen providing unit 11 of the operation server 10 acquires the screen data corresponding to a call operation screen corresponding to the tenant ID, the store ID, and the call location ID included in the URL of the acquisition request (S 107). At this time, the screen providing unit 11 refers to the screen information storage unit 121, identifies a storage destination of the screen data corresponding to the call operation screen corresponding to the tenant ID, the store ID, and the call location ID included in the URL, and acquires the screen data from the storage destination.

FIG. 6 is a diagram illustrating a configuration of the screen information storage unit 121 according to the present embodiment. As illustrated in FIG. 6, the screen information storage unit 121 stores a tenant ID, store a store name associated with a store ID, and stores a call location ID and a screen data save location for each of one or more locations where a call may be requested in a store associated with a corresponding store ID. The store name is a name of a store associated with the store ID. The screen data save location is a file path name indicating a save location of the screen data of the call operation screen, namely indicating where the screen data of the call operation screen is stored. In other words, in the present embodiment, different call operation screens are available to be set, and each of the different call operation screens may be associated with a corresponding tenant, a corresponding store, or a corresponding call location. When the call operation screen is not required to be changed for each store, the screen data save location may not be set for each store ID. In addition, when the call operation screen is not required to be changed for each call location, the screen data save location may not be set for each call location ID.

The screen data save location may be in the auxiliary storage device 102 or another device that manages a screen data group.

Subsequently, the screen providing unit 11 transmits a response with the acquired screen to the customer terminal 50 (S108).

Upon receiving the response, the browser 52 of the customer terminal 50 displays the call operation screen on the customer terminal 50 based on the screen data included in the response (S109).

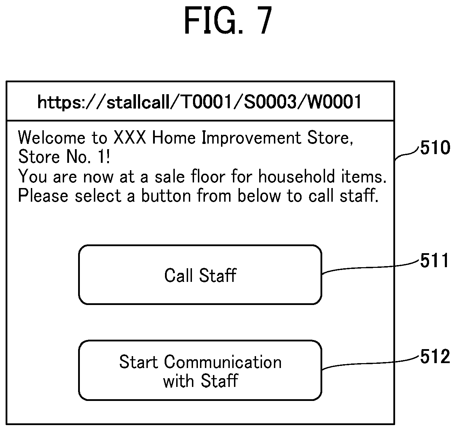

FIG. 7 is a diagram illustrating an example of display of call operation screen according to the present embodiment. A call operation screen 510 includes a button 511 and a button 512. The button 511 is a button for receiving an instruction to call staff by a fixed format message set in advance. The button 512 is a button for receiving an instruction to call staff to start a voice call with a staff member. In the following description of the embodiment, a call corresponding to the button 511 is referred to as a "fixed format message call," and a call corresponding to the button 512 is referred to as a "voice input call."

When the customer selects the button 511 (S110), the browser 52 transmits, to the operation server 10, a staff call request including a tenant ID, a store ID, a call location ID, and a type ID that are associated with the button 511 in the screen data of the call operation screen 510 (S111). The tenant ID, the store ID, the call location ID, and the type ID may be embedded in the definition of the button 511 in the screen data. The type ID is identification information indicating a type of a call (call notification). In the present embodiment, the call type is either of the fixed format message call (fixed format message) or the voice input call (voice input message). The type ID in step S111 is a value corresponding to a fixed format message call.

When the receiving unit 12 of the operation server 10 receives the call request, the identifying unit 13 identifies the notification destination and the notification content of the call request with reference to the notification management information storage unit 122 (S112).

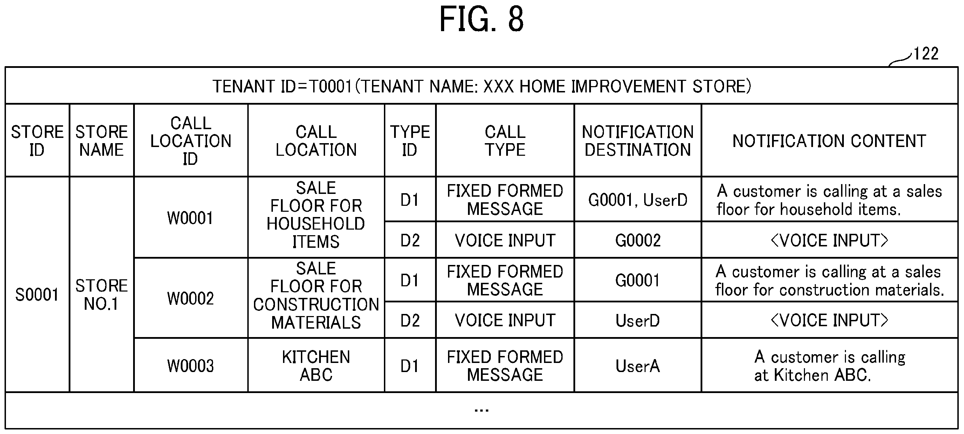

FIG. 8 is a diagram illustrating a configuration of the notification management information storage unit 122, according to the present embodiment. As illustrated in FIG. 8, the notification management information storage unit 122 stores notification management information for each tenant ID, store ID, call location ID, and type ID. The notification management information is information including a tenant ID, a store ID, a call location ID, a type ID, a call type, a notification destination, and notification content. The call type is a character string indicating a type of call associated with the type ID. The notification destination is a notification destination of the call request. Either of the group ID or the staff member ID is used as, or both of the group ID and the staff member ID are used as a value of the notification destination. The group ID is identification information for a call group.

The staff member ID is identification information for a staff member. In the present embodiment, the group ID is a character string starting with "G", and the staff member ID is a character string starting with "User." The notification content is information indicating the content of notification to the notification destination. When the call type is the fixed format message call, a value of the notification content is a character string indicating a message set in advance. When the call type is the voice input call, a value of the notification content is "<VOICE INPUT>." The "<VOICE INPUT>" indicates that the notification content is a voice message input (spoken) by a customer when a call is made.

In step S112, the identifying unit 13 identifies the notification destination and the notification content corresponding to the tenant ID, the store ID, the call location ID, and the type ID included in the received call request with reference to the notification management information storage unit 122. For example, it is assumed that the customer selects the button 511 on the call operation screen 510 displayed based on the two-dimensional code attached to a sales floor for household items of a store NO.1 (store ID = S0001) in the tenant, T0001. It is assumed that the call location ID corresponding to the button 511 is WO001 and the type ID is D1. In this case, the identifying unit 13 identifies a group ID, "G0001," and a staff member ID, "User D," as the notification destination(s), and identifies "A customer is calling at a sales floor for household items." as the notification content.

Subsequently, the notification control unit 14 generates voice data that indicates the notification content identified by the identifying unit 13 (S113). The voice data indicating the notification content may be generated in advance. In case that the voice data is generated in advance, the voice data may be recorded in the "NOTIFICATION CONTENT" of the notification management information storage unit 122, and the notification control unit 14 acquires the voice data. In this case, step S113 may not be performed.

In addition, such voice data that is based on text data indicating the notification content may be generated by the call server 20. In this case, in step S114, which is described later, the text data may be transmitted in alternative to the voice data. The call server 20 may generate the voice data based on the text data.

Subsequently, the notification control unit 14 transmits the identified notification destination and the generated voice data to the call server 20, thereby requesting the call server 20 to notify the notification destination of the voice data (S114). The request to the call server 20 may be implemented by calling an application program interface (API) provided by the call server 20. In this case, the notification control unit 14 transmits the notification destination and the voice data to the call server 20 as parameters of the API.

Upon receiving the notification destination and the voice data transmitted from the notification control unit 14 of the operation server 10, the call control unit 21 of the call server 20 transmits the voice data to the call application 61 of the staff terminal 60 corresponding to the notification destination (S115). Association information between a staff member ID and identification information, such as an address, of a corresponding one of the plurality of staff terminals 60 is stored in advance in, for example, the auxiliary storage device 102. By using the association information, the call control unit 21 identifies the staff terminal 60 corresponding to the staff member ID based on the staff member ID. When a group ID is designated as the notification destination, the notification control unit 14 refers to the call group storage unit 22 and identifies a plurality of staff member IDs corresponding to the group ID.

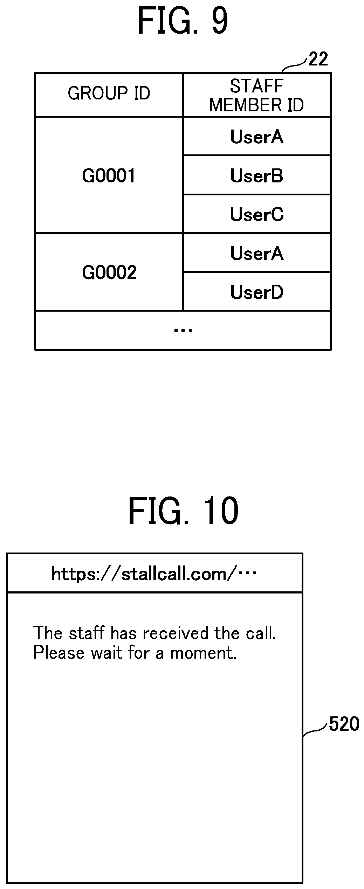

FIG. 9 is a diagram illustrating a configuration of the call group storage unit 22, according to the present embodiment. As illustrated in FIG. 9, the call group storage unit 22 stores, for each call group, a group ID for a corresponding call group and plural staff member IDs each of which corresponding to a staff member belonging to the call group in association with each other.

Step S115 is performed for each staff member ID (for each staff terminal 60) identified as a notification destination. Steps S116 and S117 that are performed according to the step S115 are also performed for each staff terminal 60, accordingly.

The call application 61 of the staff terminal 60 that has received the voice data transmitted by the call control unit 21 requests the call communication device 70 connected to the staff terminal 60 to reproduce the voice data (S116). In response to the request, the call communication device 70 reproduces the voice data (S117).

For example, in case that the notification destination is as the example described above in relation to step S112, the call communication devices 70 corresponding to the staff terminals 60 each of which is associated with one of staff member IDs of "User D," "User A," "User B," and "User C" reproduce the voice data to output the voice message of "A customer is calling at a sales floor for household items." The staff IDs of "User A," "User B," and "User C" belongs to a group ID of "G0001." In other words, each staff member who carries one of the staff terminals 60 each of which is identified as the notification destination receives the voice message. The staff member(s) who has(have) received the notification goes(go) to the sales floor for household items to attend to the customer corresponding to the call.

After step S114 is performed, the receiving unit 12 of the operation server 10 transmits a response including screen data of a call completion screen to the customer terminal 50 (S118). Upon receiving the response, the browser 52 of the customer terminal 50 displays the call completion screen based on the screen data included in the response (S119).

FIG. 10 is a diagram illustrating an example of display of call completion screen, according to the present embodiment. As illustrated in FIG. 10, a call completion screen 520 includes a message indicating that calling staff has been completed. The call completion screen 520 allows the customer to know that the call from him or her been transmitted. Then, the staff member who has received the call goes to the call location.

As described above, the process of calling staff is completed.

A description is given below of a case where the customer selects the button 512 on the call operation screen 510 illustrated in FIG. 7.

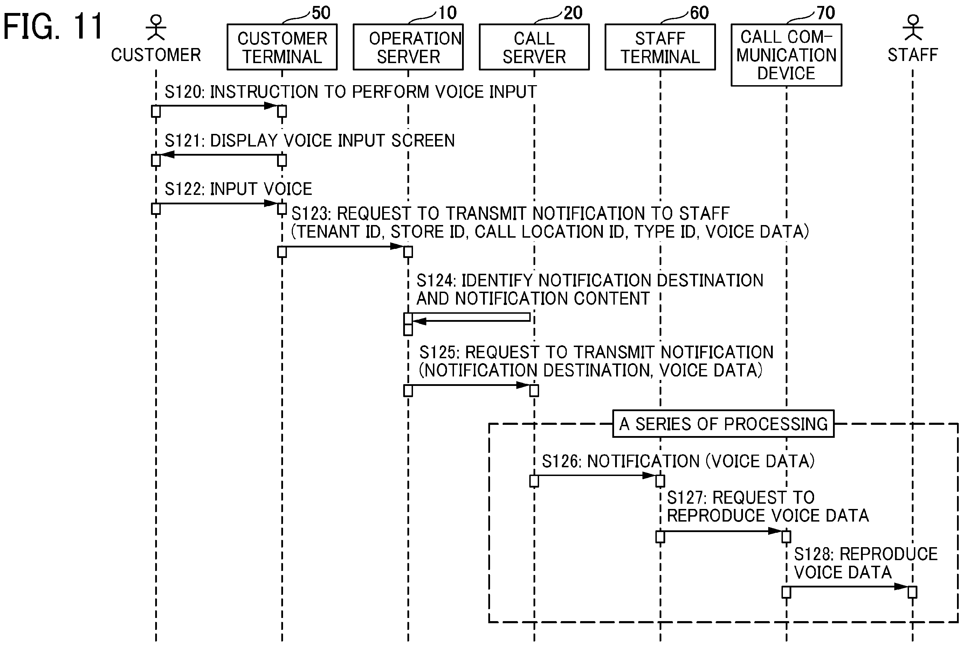

FIG. 11 is a sequence diagram illustrating a process performed by the information processing system 1 according to the present embodiment. In FIG. 11, the process starts after performing step S109 of FIG. 4, which includes FIG. 4A and FIG. 4B, namely that the customer terminal 50 displays the call operation screen 510.

When the customer selects the button 512 (S120), the browser 52 of the customer terminal 50 displays a voice input screen on the customer terminal 50 (S121).

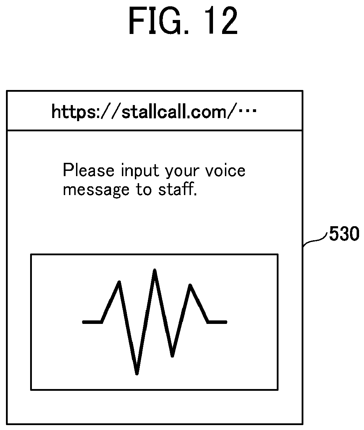

FIG. 12 is a diagram illustrating an example of display of voice input screen, according to the present embodiment. As illustrated in FIG. 12, a voice input screen 530 is a screen for prompting a customer to perform voice input (speaking) corresponding to a message to be transmitted to staff, and is a screen for causing the customer terminal 50 to perform input of voice data according to the voice of the customer. The screen data of the voice input screen 530 is transmitted from the operation server 10 together with the screen data of the call operation screen 510. The browser 52 switches from the call operation screen 510 to the voice input screen 530 in response to a corresponding operation received on the call operation screen 510.

Subsequently, the customer terminal 50 inputs the voice, which is corresponding to any desired message, of the customer (S122). For example, the customer says, "I'd like to know where I can find kitchen knives." Note that the voice input screen 530 has a function of detecting completion of voice input.

In response to completion of voice input, inputting the voice of the customer, the browser 52 transmits a staff call request (call request) including the tenant ID, the store ID, the call location ID, and the type ID associated with the button 512 or the voice input screen 530 to the operation server 10 (S123). The tenant ID, the store ID, the call location ID, and the type ID may be embedded in the definition of the button 512 in the screen data of the call operation screen 510, or may be embedded in the screen data of the voice input screen 530.

When the receiving unit 12 of the operation server 10 receives the call request, the identifying unit 13 refers to the notification management information storage unit 122 to identify a notification destination and notification content corresponding to the tenant ID, the store ID, the call location ID, and the type ID included in the call request (S124). For example, it is assumed that the customer selects the button 512 on the call operation screen 510 displayed based on the two-dimensional code attached to a sales floor for household items of the store NO.1 (store ID = S0001) in the tenant, T0001 and perform an operation for the voice input. When the call location ID corresponding to the button 512 is WO011 and the type ID is D2, the group ID of G0001 is identified as the notification destination. Since the "NOTIFICATION CONTENT" corresponding to the tenant ID, the store ID, and the call location ID is "<VOICE INPUT>," the identifying unit 13 identifies the received voice data as the notification content, in alternative to a fixed notification content (message) set in advance.

Subsequently, the notification control unit 14 transmits the notification destination identified the identifying unit 13 and the received voice data to the call server 20, thereby requesting the call server 20 to notify the notification destination of the voice data (S125).

Upon receiving the notification destination and the voice data transmitted from the notification control unit 14 of the operation server 10, the call control unit 21 of the call server 20 transmits the voice data to the call application 61 of the staff terminal 60 corresponding to the notification destination (S126). A method of identifying the staff terminal 60 corresponding to the notification destination is substantially the same as the one described above with reference to S115.

Step S126 is performed for each of the plurality of staff terminals 60 identified as a notification destination. Steps S127 and S128 that are performed according to the step S126 are also performed for each staff terminal 60, accordingly.

The call application 61 of the staff terminal 60 that has received the voice data transmitted by the call control unit 21 requests the call communication device 70 connected to the staff terminal 60 to reproduce the voice data (S127). In response to the request, the call communication device 70 reproduces the voice data (S128). According to the example of step S124, the call communication device 70 corresponding to the staff terminals 60 each of which is associated with one of the staff member IDs of "User D," "User A," "User B," and "User C" reproduce the voice data to output the voice message of "I'd like to know where I can find kitchen knives." The staff IDs of "User A," "User B," and "User C" belongs to a group ID of "G0001." The staff member(s) who has(have) received the notification goes(go) to the sales floor for household items to attend to the customer corresponding to the call. Alternatively, the staff member may notify the customer of a place of kitchen knives by performing voice input corresponding to a message indicating the place of kitchen knives, with the call communication device 70.

A description is given below of registering notification management information in advance. The notification management information is registered by using the registration terminal 80. For example, when a user such as a staff member of the retailer X inputs a predetermined URL to the browser 81 of the registration terminal 80, the browser 81 acquires screen data corresponding to the URL The browser 81 displays a registration screen on the registration terminal 80 based on the screen data. The URL includes a tenant ID and a store ID as optional information. In other words, the tenant ID and the store ID are included in the screen data of the registration screen to be displayed.

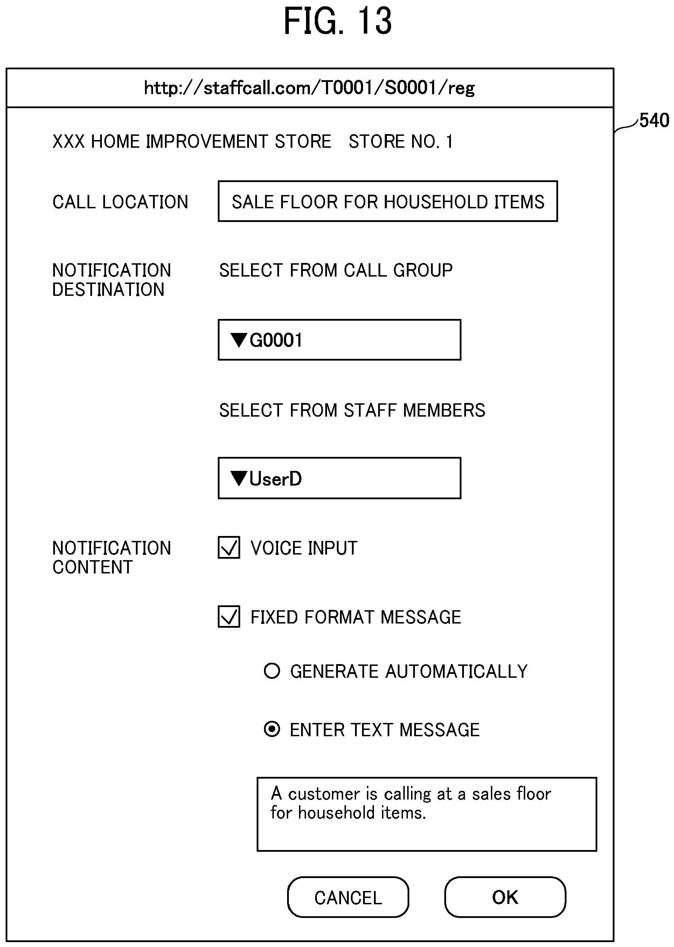

FIG. 13 is a diagram illustrating an example of display of registration screen, according to the present embodiment. As illustrated in FIG. 13, a registration screen 540 includes setting sections each of which is for a call location, a notification destination, and notification content. The call location is input as a character string. The character string may not be manually input. For example, a call location may be selected from a list of call locations that have already been registered for another store of the same tenant. The notification destination may be set by selecting a call group or a staff member ID, which is registered in advance. As a notification destination, one or more destinations are selectable, and both of a call group and a staff member are selectable. The notification content has voice input (voice input message) and a fixed format message as options as call types. Both of the voice input and the fixed format message may be selected, alternatively, either one of the voice input or the fixed format message may be selected. Until at least one of the voice input or the fixed format message is selected, an OK button is not available to be selected. When the fixed format message is selected, either one of automatic generation ("GENERATE AUTOMATICALLY") or manual input ("ENTER TEXT MESSAGE") is selectable. When the automatic generation is selected, a message including a call location (for example, XXX) and predetermined text (for example, "A customer is calling at XXX.") is automatically generated. For example, by combining "Sales floor for household items" and "A customer is calling at," a message "A customer is calling at the sales floor for household items." is generated, and the generated message is input to a text box. When the manual input is selected, the user enters a character string representing a message in the text box.

When the OK button is selected according to a user operation, the browser 81 transmits, to the operation server 10, content of settings input on the registration screen 540, in addition a registration request including the tenant ID and the store ID associated with the OK button. The registration unit 15 of the operation server 10 generates a new call location ID in response to the registration request. The registration unit 15 adds, to the notification management information storage unit 122, a record corresponding to the tenant ID and the store ID, which are included in the registration request, and the call location ID. The registration unit 15 registers the content of settings included in the registration request in the record. In a case where both of the voice input and the fixed format message are selected on the registration screen 540 (FIG. 13), the record includes two sub-records for items after the type ID (includes sub-records corresponding to the voice input and the fixed format message). When the fixed format message is selected, the registration unit 15 may convert text data indicating the message into voice data and register the voice data as the notification content corresponding to the fixed format message.

In response to registration of a new record in the notification management information storage unit 122, the registration unit 15 further performs a process of generating screen data of the call operation screen 510 corresponding to a tenant ID, a store ID, and a call location ID of the record.

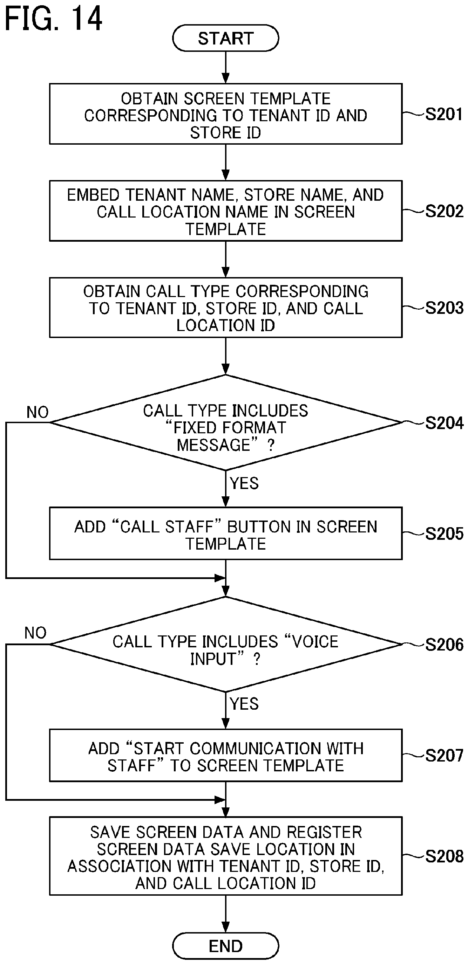

FIG. 14 is a flowchart illustrating a process of generating screen data of a call operation screen, according to the present embodiment.

In step S201, the registration unit 15 obtains a screen template corresponding to a tenant ID and a store ID of a record to be newly added. Screen templates are stored in advance for each tenant ID and each store ID, and the screen template corresponding to the record, to be newly added, is acquired from the screen templates. The screen template is a template of screen data, and is data in which a part related to a tenant, a store, a call location is not defined, for example.

Subsequently, the registration unit 15 embeds a tenant name, a store name, and a call location corresponding to the record in the screen template (S202). For example, with respect to the message displayed on the call operation screen 510 illustrated in FIG. 7, the template is as follows. "Welcome to <Tenant Name>, <Store Name>! You are now at <Call Location>." The registration unit 15 embeds "XXX Home Improvement Store," "Store No. 1," and "a sale floor for household items" in the template.

Subsequently, the registration unit 15 obtains a call type included in the record (S203). Subsequently, the registration unit 15 determines whether the call type includes a "fixed format message" or not (S204). When the "fixed format message" is included (YES in S204), the registration unit 15 adds a definition corresponding to the button 511 ("Call Staff' button) to the screen template (S205).

When the "fixed format message" is not included (NO in S204) or subsequent to step S205, the registration unit 15 determines whether "voice input" is included in the call type or not (S206). When the "voice input" is included (YES in S206), the registration unit 15 adds a definition corresponding to the button 512 ("Start Communication with Staff" button) to the screen template (S207).

In the case of No in step S206 or subsequent to step S207, the registration unit 15 stores the screen template as screen information and registers the storage destination in the screen information storage unit 121 in association with the tenant ID, the store ID, and the calling place ID (S208).

The process of FIG. 14 may be performed in synchronization with the registration of the record, or may be performed at a predetermined time (for example, nighttime) after the record is registered. Alternatively, the process of FIG. 14 may be performed at a time of the first access (step S106) to the URL corresponding to the record.

A description is given below of generating a two-dimensional code as illustrated in FIG. 5. The two-dimensional code is generated using the registration terminal 80. For example, when a user such as a staff member of the retailer X inputs a predetermined URL to the browser 81 of the registration terminal 80, the browser 81 transmits an acquisition request for a registration list screen to the URL The URL includes a tenant ID, a store ID, and a call location ID.

Upon receiving the acquisition request, the registration unit 15 of the operation server 10 acquires a record corresponding to the tenant ID, the store ID, and the call location ID included in the URL related to the acquisition request from the notification management information storage unit 122. The registration unit 15 generates screen data of a registration list screen based on the acquired record. The registration unit 15 transmits a response including the screen data to the registration terminal 80. The browser 81 of the registration terminal 80 displays a registration list screen based on the screen data.

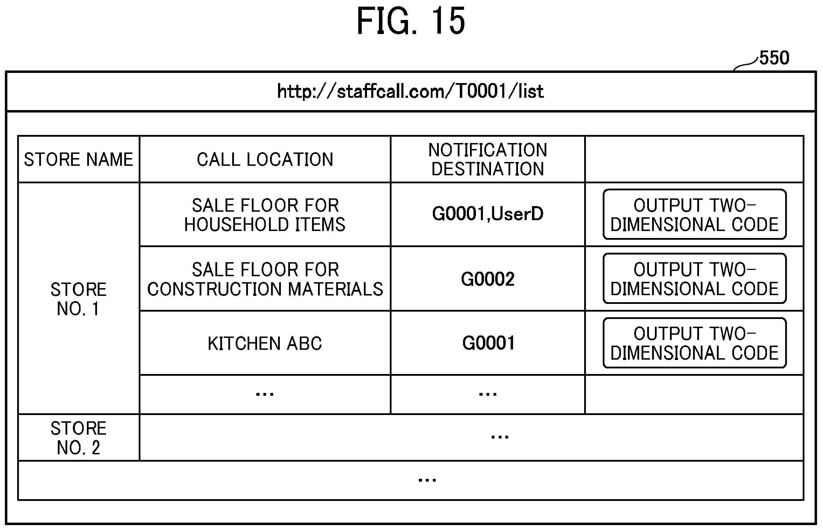

FIG. 15 is a diagram illustrating an example of display of registration list screen, according to the present embodiment. As illustrated in FIG. 15, a registration list screen 550 includes a list related to notification management information corresponding to each store ID belonging to a specific tenant ID. An "OUTPUT TWO-DIMENSIONAL CODE" button is associated with each notification management information item. When the user selects the "OUTPUT TWO-DIMENSIONAL CODE" button corresponding to any one of the notification management information items, the browser 81 generates a URL that includes a tenant ID, a store ID, and a call location ID corresponding to the notification management information item and that corresponds to the call operation screen 510. The browser 81 converts the URL into a two-dimensional code, and outputs image data of the converted two-dimensional code to the registration terminal 80. At this time, the browser 81 may receive settings for content to be described on a sheet being to include the two-dimensional code and a layout of an image on the sheet. In this case, the browser 81 transmits, to the operation server 10, the settings for content along with the two-dimensional code. The operation server 10 may cause a predetermined print service to print out the sheet based on the settings for content. In addition, the registration unit 15 of the operation server 10 may convert the notification content stored as text data in the notification management information storage unit 122 into voice data at a time when a request, which is transmitted from the browser 81 in response to selection of the "OUTPUT TWO-DIMENSIONAL CODE" button, is received.

In the exemplary case of above described embodiment, the information processing system 1 is applied to a retail store. The information processing system 1 is applicable to various facilities (including stores) in each of which service is provided for customers. For example, the information processing system 1 may be applied to a restaurant, an accommodation facility, or an exhibition hall. For example, in the case of a restaurant, the call location is a certain table, in the case of an accommodation facility, the call location is a certain room, and in the case of an exhibition hall, the call location is a certain exhibition booth.

As described above, according to at least one embodiment, a notification destination of a call for staff from a customer is automatically identifiable. In other words, which staff member(s) is(are) to respond to a call from a customer is identifiable. As a result, the information processing system 1 according to the embodiment described above assists to achieve efficient customer service.

According to at least one embodiment, information identifying a specific location, such as the tenant ID, the store ID, and the call location ID, is embedded into image data, such as screen data, accessible by the customer terminal. For example, the customer terminal reads call location identification information from an extraneous resource, such as a printed image of two-dimensional code encoded with the call location identification information, and accesses screen data that is identified using the read call location identification information. With this configuration, any communication terminal may be used as the customer terminal, such as a portable phone carried by the customer. Accordingly, there is no need to provide the customer terminal at the store. Further, since the customer is able to use his/her own customer terminal (that is, portable phone, for example), he or she may feel more comfortable by operating the terminal.

According to at least one embodiment, correspondence between the information identifying the specific location (such as the call location) and the information identifying a notification destination may be freely set, for example, via a registration screen. With this configuration, an appointment of staff can be appropriately made in various situations. For example, in case the customer calls in the location where construction materials are sold, it would be more efficient to call the staff member who has knowledge about the construction materials. In such case, the staff member who has knowledge about the construction materials is previously associated with the sale floor for construction materials. In such case, the information identifying the specific location may include information on particular items being sold or provided.

Moreover, information identifying a type of a call may be provided to indicate content of message. This may be used to determine the most appropriate staff member according to the type of call.

Each of the functions of the above-described embodiment may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

The devices (apparatuses) and the like described in the examples are merely an illustration of one of several computing environments for implementing the embodiment described above.

In some embodiments, an operation server corresponding to the operation server 10 in the above-described embodiment includes multiple computing devices, such as a server cluster. The multiple computing devices communicate with one another through any type of communication link including a network, shared memory, etc., and perform each process described in the above-described embodiment. Similarly, in some embodiments, a call server corresponding to the call server 20 in the above-described embodiment includes multiple computing devices that communicates with one another.

In addition, the operation server 10 and the call server 20 may be configured to share the disclosed processing steps, for example, FIG. 4, which includes FIG. 4A and FIG. 4B or FIG. 11, in various combinations. For example, processing executed by a particular unit may be executed by the call server 20. Similarly, a function of a particular unit may be performed by the call server 20. Each functional configuration of the operation server 10 and the call server 20 may be combined into one server or may be divided into a plurality of devices.

Further, the notification management information storage unit 122 may be generated by machine learning. For example, the notification management information storage unit 122 may be caused to learn data registered for an existing store as teacher data and generate a learned model in which a correlation with a call location, a call type, a notification destination, or notification content is derived. Registration of the notification management information may be automated by inputting sales floor information of a new store to the generated learned model.

In the present disclosure, the machine learning is defined as a technology that makes a computer to acquire human-like learning ability. In addition, the machine learning refers to a technology in which a computer autonomously generates an algorithm used for determination such as data identification from learning data loaded in advance and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

In the above-described embodiment, the operation server 10 is an example of an information processing device. The call location ID is an example of first identification information (call location identification information). The store ID is an example of second identification information (facility identification information). The type ID is an example of third identification information (call type identification information).

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing device (10), comprising:
a receiving unit (12) configured to receive, from a terminal (50), call location identification information identifying a location at which a request for a call notification is made with the terminal (50);
an identifying unit (13) configured to identify a notification destination based on the call location identification information, the notification destination being a destination of the call notification; and
a notification control unit (14) configured to transmit voice data to the notification destination as notification content of the call notification.

2. The information processing device (10) of claim 1, wherein
the identifying unit (13) refers to a storage unit (112) in which the call location identification information and information on the notification destination are stored in association with each other to identify the notification destination.

3. The information processing device (10) of any one of claim 1 and claim 2, wherein,
the receiving unit (12) receives facility identification information identifying a facility in which the call location is included, and
the identifying unit (13) identifies the notification destination based on the call location identification information and the facility identification.

4. The information processing device (10) of any one of claim 1 to claim 3, wherein,
the receiving unit (12) receives call type identification information identifying a type of the call notification, the type of the call notification being one of a fixed format message and a voice input message,
the identifying unit (13) identifies the notification content based on the call type identification, and
in case that the call type identification information is the voice input message, the voice data transmitted to the notification destination is one that is transmitted from the terminal (50).

5. The information processing device (10) of any one of claim 1 to claim 4, wherein
the call notification is a call from the terminal (50) used by a customer to one or more other terminals (60) each of which is used by a member of staff.

6. The information processing device (10) of any one of claim 1 to claim 5, further comprising:
a screen information storage unit (121) configured to store information indicating a screen data save location in association with the call location identification information; and
a screen providing unit (11) configured to acquire screen data from the screen data save location associated with the call location identification information transmitted from the terminal (50), and provide the screen data to the terminal (50) for display,
wherein the receiving unit (12) receives a staff call request from the terminal (50), the staff call request including the call location identification information and being transmitted from the terminal (50) in response to operation by the customer on a screen displayed based on the screen data.

7. An information processing system (1), comprising:
a terminal (50) used by a customer, the terminal being configured to execute an application (51) to read call location identification information from an extraneous resource, and transmit the call location identification information; and
an information processing device (10), the information processing device including
a receiving unit (12) configured to receive, from the terminal (50), the call location identification information identifying a call location at which a request for a call notification is made with the terminal (50),
an identifying unit (13) configured to identify a notification destination based on the call location identification information, the notification destination being a destination of the call notification, and
a notification control unit (14) configured to transmit voice data to the notification destination as notification content of the call notification.

8. The information processing system (1) of claim 7, wherein the information processing device (10) further comprises:
a screen information storage unit (121) configured to store information indicating a screen data save location in association with the call location identification information; and
a screen providing unit (11) configured to acquire screen data corresponding to the call location identification information from the screen data save location, and transmit the acquired screen data to the terminal (50),
wherein the terminal (50) is configured to
display a screen based on the screen data received from the information processing device (10), and
transmit a staff call request to the information processing device (10) in response to operation by the customer on the displayed screen, the staff call request including the call location identification information.

9. An information processing method, comprising:
receiving (S111, S123), from a terminal (50), call location identification information identifying a call location at which a request for a call notification is made with the terminal (50);
identifying (S112, S124) a notification destination based on the call location identification information, the notification destination being a destination of the call notification; and
transmitting (S114, S125) voice data to the notification destination as notification content of the call notification.

10. The information processing method of claim 9, wherein
the identifying (S112, S124) includes referring to a storage unit (112) in which the call location identification information and information on the notification destination are stored in association with each other to identify the notification destination.

11. The information processing method of any one of claim 9 and claim 10, wherein
the receiving (S111, S123) includes receiving facility identification information identifying a facility including the call location, and
the identifying (S112, S124) includes identifying the notification destination based on the call location identification information and the facility identification.

12. The information processing method of any claim 9 to claim 11, wherein
the receiving (S111, S123) includes receiving call type identification information identifying a type of the call notification, the type of the call notification being one of a fixed format message and a voice input message,
the identifying (S112, S124) includes identifying the notification content based on the call type identification, and
in case that the call type identification information is the voice input message, the voice data transmitted to the notification destination is one that is transmitted from the terminal (50).

13. The information processing method of any claim 9 to claim 12, wherein
the call notification is a call from the terminal (50) used by a customer to one or more other terminals (60) each of which is used by a member of staff.

14. A carrier means carrying a computer system readable code for controlling a computer to carry out the method of claim 9.
